# EUROPEAN PATENT APPLICATION

(11) **EP 1 326 044 A2**
(43) Date of publication of application: **09.07.2003**
(21) Application number: 03250068.8
(22) Date of filing: 07.01.2003
(51) Int. Cl.: F16L 33/12

(54) **Toggle clamp with asymmetrical-shaped gasket**

(30) Priority: 08.01.2002 US 346593 P; 26.12.2002 US 329633 P
(71) Applicant: Construction Forms, Inc., Port Washington, Wisconsin 53074 (US)
(72) Inventor: Guslick, Gordon W., Grafton, Wisconsin 53024 (US); Lehnhardt, Gary D., Cedar Grove, Wisconsin 53014 (US)
(74) Representative: Carpenter, David

(57) **Abstract**

A locking arrangement for a pipe coupling takes the form of a spring biased pin captively and moveably mounted in a through opening formed either in an overlapping member of one of the coupling sections or the handle for movement into and out of an alignable opening formed on either the handle or on the one overlapping member of the one coupling section. The pipe coupling includes an assymetrically shaped gasket for permitting coupling of a metric end boom elbow or pipe with a heavy-duty end boom hose or pipe.

## Description

### CROSS REFERENCE TO RELATED APPLICATION

This application is based on Provisional U.S. Patent Application Serial No. 60/346,593 filed January 8, 2002.

### FIELD OF THE INVENTION

The present invention relates to pipe couplings used to releasably couple pipe sections in axial end to end relationship and, more particularly, pertains to an improved auto locking arrangement for preventing inadvertent disengagement of the couplings during use.

### BACKGROUND OF THE INVENTION

It has become common practice in the construction business to supply concrete to a work site by truck and transfer the concrete ready for use to the site of construction using temporary conduits assembled from sections of pipe held together with pipe couplings and extended from the delivery truck to the work site.

One well known pipe coupling used in concrete delivery is disclosed in U.S. Patent No. 3,705,737 issued December 12, 1972 and assigned to the assignee of this application. In the '737 patent, there is disclosed a pipe coupling having a pair of arcuate coupling members hinged together at a hinge joint and secured in place at the intersection of pipe sections with a toggle assembly which is easy to operate in the field and which provides reliable performance. A latch interconnects the coupling members together opposite their hinge joint. The toggle assembly is operated by a handle which includes a lock for assuring that once the pipe coupling is in place at the coupled ends of the pipe sections, inadvertent release of the toggle assembly is precluded. The lock is in the form of a locking pin inserted into registered holes to fix the handle in place. Such locking pins are relatively expensive because of their construction to withstand severe forces in their application. It has been found that the locking pins are susceptible to being dislodged from their arrangement with the walls of aligned holes in the handle and coupling members such that the coupling may become inadvertently disengaged from its pipe sections. They also can be misplaced and lost because of their size and the busy working environment.

One effort made to improve the coupling locking arrangement is disclosed in U.S. Patent No. 5,988,694 issued November 23, 1999. In the '694 patent, the locking pin is replaced by a locking lever movable into a locking location to juxtapose generally complimentary locking surfaces to lock the latch in the locking position. The lever is movable into an unlocking location wherein the generally complimentary locking surfaces are out of juxtaposition for release of the latch from movement to the unlatched position. While such device is generally satisfactory, the possibility exists that the operator overlooks to manually latch the lock, the overall lever arrangement is more complex and costs more than desired.

Accordingly, there remains a need for a differently styled pipe coupling locking arrangement which automatically locks and permits unlocking of the coupling handle in an easy, reliable manner and does not permit losing or misplacing of the locking pin.

Until now, to make the transition from a metric boom elbow or pipe on a concrete delivery truck to a five inch diameter boom hose or pipe with HEVI-DUTY™ ends, it has been necessary to install a metric coupling, a metric to heavy duty adapter, and a heavy duty coupling to connect the hose. This three part assembly adds weight, additional setup time and cost to one's operation. It would be desirable to replace the aforementioned three part assembly with this single metric to heavy duty coupling to allow the direct coupling of the boom elbow or pipe to the hose or pipe with heavy-duty ends.

### SUMMARY OF THE INVENTION

It is a general object of the present invention to provide an improved locking arrangement between the handle and coupling members of a pipe coupling.

It is also an object of the present invention to provide a coupling locking arrangement which takes the form of a spring biased pin which is held captive by the coupling to prevent loss or misplacement of the pin.

It is an additional object of the present invention to provide a pipe coupling locking arrangement in which the spring biased pin can be easily pulled to enable opening of the coupling handle and which will allow for automatic snap locking of the pin when the handle is closed.

It is another object of the present invention to provide a pipe coupling locking arrangement which has a minimum number of parts and requires no special tools or skilled labor to operate.

It is a further object of the present invention to provide a pipe coupling locking arrangement offering a greater degree of securement of a coupling when engaged with end to end pipe sections.

It is yet another object of the present invention to provide a locking arrangement used with pipe coupling members having different and cooperating constructions to enable the connection of a metric boom elbow or pipe to a five inch diameter boom hose or pipe wit heavy-duty ends.

In one aspect of the invention, a coupling unit is provided for interconnecting of a pair of pipe sections comprising a plurality of coupling sections interconnected to define a cylindrical enclosure in closed position for encircling the adjacent ends of a pair of conduits. The sections are interconnected to each other and include at least one hinge joint permitting relative pivotal movement of the sections to the opposite sides of the hinge joint between an open expanded position for insertion and removal of the conduits and the closed circular position. A releasable interconnecting latch device is interconnected to a pair of adjacent sections opposite the hinge joint and has an interconnecting handle pivoted between a coupling release position and a coupling closed position to establish the closed circular position with a relatively high closing pressure. The handle has a generally arcuate configuration and is pivotally mounted adjacent one end and extends circumferentially from the latch device about the coupling sections in the closed position. The handle and one of the coupling sections have radially overlapping members. A locking arrangement is releasably engageable with the radially overlapping members to hold the handle in the closed position. The invention is improved wherein the locking arrangement takes the form of a spring biased pin captively and moveably mounted in a through opening formed either in one overlapping member of the one coupling section or the handle for movement into and out of an alignable opening formed on either the handle or on one overlapping member of the one coupling section.

In another aspect of the invention, a coupling unit is provided for interconnecting a pair of pipe sections. A plurality of coupling sections is interconnected to define a cylindrical enclosure in a closed position for encircling the adjacent ends of a pair of cylindrical conduits. The sections are interconnected to each other and include at least one hinge joint permitting relative pivotal movement of the sections to the opposite sides of the hinge joint between an open expanded position for insertion and removal of the conduit means and the closed circular position. A releasable interconnecting latch is interconnected to a pair of adjacent sections opposite the hinge joint and has an interconnecting handle pivoted between a coupling release position and a coupling close position to establish the closed circular position with a relatively high closing pressure. The handle has a generally arcuate configuration and is pivotally mounted adjacent one end and extends circumferentially from the latch about the coupling sections in the closed position. The handle and one of the coupling sections have radially overlapping members. Locking structure is releasably engageable with the overlapping members to hold the handle in the closed position. An assymetrically-shaped, circular gasket is located within a cavity defined in the coupling unit and between the ends of the conduits. The gasket is constructed and arranged to enable direct coupling of the adjacent ends of the conduits wherein each end of the conduits has a diameter of different size.

Various other features, objects and advantages of the invention will be made apparent from the following description taken together with the drawings.

### BRIEF DESCRIPTION OF THE DRAWINGS

The drawings illustrate the best mode presently contemplated of carrying out the invention.

In the drawings:
Fig. 1 is a side elevational view of a prior art coupling unit;
Fig. 2 is an end elevational view of the prior art coupling unit shown in Fig. 1 showing an interconnecting fixed hinge;
Fig. 3 is an opposite end view of the prior art coupling unit shown in Fig. 1 illustrating the toggle type connector;
Fig. 4 is a pictorial view showing the prior art coupling unit in Figs. 1-3 in the open position;
Fig. 5 is a perspective view of a coupling unit embodying the locking arrangement of the present invention;
Fig. 6 is a partial sectional view of the locking arrangement shown in Fig. 5;
Fig. 7 is a fragmentary, perspective view of a gasket used in the pipe coupling unit which enables coupling of a metric end boom elbow to a five inch diameter heavy duty end hose;
Fig. 8 is an elevational view of an alternative embodiment of the locking arrangement with the coupling handle in a closed position;
Fig. 9 is a view of the locking arrangement in Fig. 8 showing the coupling handle in an open position;
Fig. 10 is an enlarged view of the locking arrangement in Fig. 9; and
Fig. 11 is an enlarged view of the locking arrangement in Fig. 8.

### DETAILED DESCRIPTION OF THE INVENTION

### Prior Art

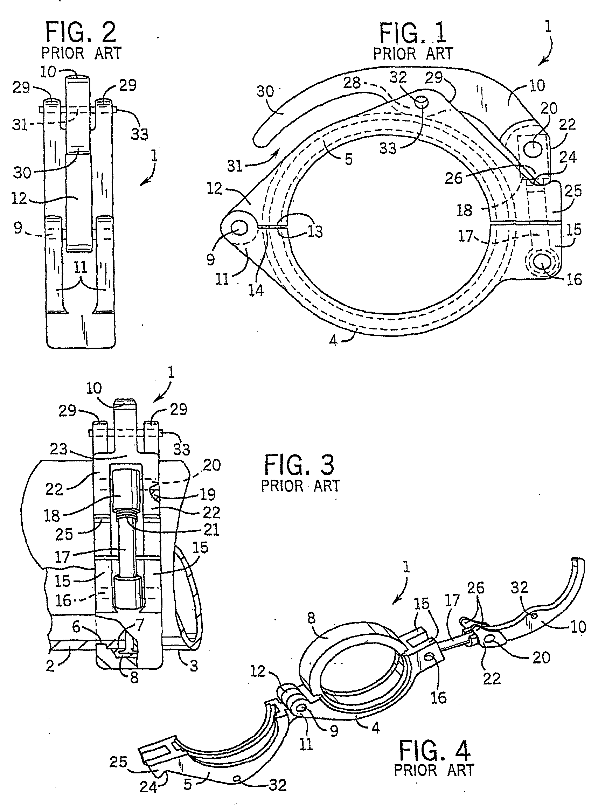

Referring now to Figs. 1-4, a prior art coupling unit 1 constructed in accordance with the assignee's U.S. Patent No. 3,705,737 is shown interconnecting a pair of metal conduits or pipes 2 and 3 in end to end relationship to establish a continuous flow path therebetween. The illustrated coupling unit 1 is a metal assembly including a pair of semi-circular sections or members 4 and 5, the opposite end faces of which are generally radial planar surfaces such that with the coupling in the closed position as shown in Fig. 1, an essentially complete circular enclosure is provided about the adjacent ends of the pipes 2 and 3. The sections 4 and 5 are formed with similar cross-sections and, in particular, are of a generally U-shaped construction with the inner edges of a somewhat reduced thickness to define radially clamping lips 6 which project inwardly into clamping recesses or grooves 7 formed in the exterior surface of the pipes 2 and 3. In addition, a circular sealing gasket 8 overlies the pipe ends within the inverted coupling members 4 and 5 in accordance with known constructions to provide a firm fluid and liquid tight joint. Thus, with the prior art coupling unit 1 in closed position as shown in Fig. 1, the physical interengagement of the coupling members with the housing sections provides a firm physical interconnection therebetween to maintain the location of the pipe sections relative to each other, and the gasket 8 provides a fluid tight joint.

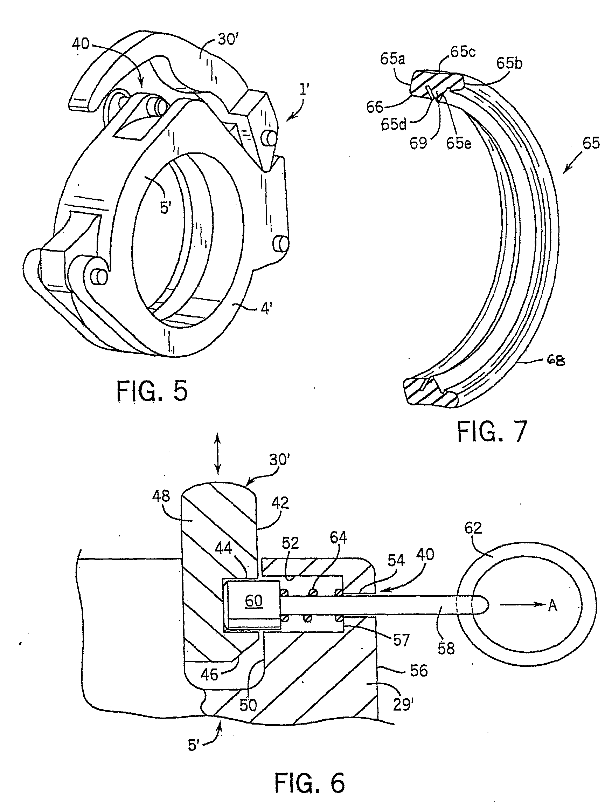

Turning particularly to Fig. 1, the prior art coupling unit 1, and particularly the members 4 and 5, are interconnected at one end by a hinge pin 9 and at the opposite end by a releasable toggle assembly including a manually operable handle 10 to permit release and opening of the coupling unit to the position shown in Fig. 4.

The members 4 include a pair of integrally formed bearing ears 11 having aligned openings through which the pin 9 projects. The ears 11 are integrally formed as a part of the member 4 such as by casting or the like and they are connected thereto by a continuous strengthening portion which extends outwardly from the exterior peripheral portion of the member 4 to establish a relatively high strength bearing member. The opposite section or member 5 includes a similar hinge bracket portion 12 which projects from the exterior surface of the member 5 between the ears 11. The bracket portion 12 has a corresponding opening through which the pin 9 extends to establish the hinge connection.

The hinge pin 9 is located on the common plane through the center of the coupling unit 1 and particularly on a common plane between the two coupling members 4 and 5 as most clearly illustrated in Figs. 1 and 2. Further, the members 4 and 5 are slightly less than a full half circle such that the planar surfaces 13 which project inwardly from the hinge portion are spaced slightly from each other to define a distinct circumferential spacing 14 between the members 4 and 5 and the closed clamping position such as shown in Fig. 1.

The coupling unit 1 is opened and closed by the pivoting of the handle 10 of the toggle assembly interconnecting the free ends of the coupling members 4 and 5 as follows.

The lower member 4 includes a pair of radially projecting ears or brackets 15 which project radially outwardly from the opposite or free end of the member 4. The brackets 15 are provided with aligned openings within which a pivot pin 16 is secured. A toggle bolt 17 is secured on the pin 16 between the brackets 15. A coupling cap 18 is secured on the opposite end of the bolt 17 and includes a lateral pivot opening 19 through which a second pivot pin 20 passes. The handle 10 has a bifurcated cam end with a pair of cam arms 22 which project over the member 18. The arms 22 have corresponding aligned openings aligned with opening 19 with the pin 20 passing therethrough and are joined by an integral base 23 to pivotally attach the handle 10 to the toggle bolt 17 through the cap 18. The cap 18 is adjustably secured to the bolt 17 by the threaded connection 21 to permit adjustment of the effective length between the pivot pins 16 and 20.

The cam arms 22 will operate with corresponding cam surfaces formed on a pair of radial brackets 25 projecting outwardly from the free end of coupling number five. Thus, the brackets 25 are shown integrally formed on the opposite or free end of the member 5 and project radially outwardly generally coextensively of the brackets 15. The outer portion of each bracket 25 is formed with a curved depression defining a cam surface 24 cooperating with the correspondingly curved shaped end of the cam arms 22. The cam surface 24 is located slightly inwardly of the axis of the toggle pin 16 with member 5 in the closed position. Consequently, when the handle 10 is pivoted to the closed position as shown in Fig. 1, the axis of the pin 20 moves inwardly of the axis of the pin 16 to provide a firm interconnecting latch as a result of the bearing engagement of the cam surfaces on the brackets 25 and the ends of cam arms 22 of the handle 10.

The central portion of the handle 10 is formed with an inwardly projecting enlargement or lug 28 which extends inwardly between a pair of upstanding flanges 29 integrally formed on the exterior of the member 5. Lug 28 is selected to engage the exterior surface of the member 5 with the pin 20 in the toggle locking position and thus to the left of the center of the axis of the toggle pin 16 as shown in Fig. 1. It thus permits complete closure of the toggle unit. The enlargement or lug 28 however, positively spaces the outer extension of the handle 10 which thus defines the manually accessible handle 30 spaced from the exterior of the member 5 as at 31.

The dependent lug 28 and the upstanding flanges 29 are preferably provided with correspondingly sized and aligned openings 32 with the handle 10 in the closed position. A latch pin 33 may be projected through the aligned openings 32 to positively lock the handle 10 in the closed position thereby preventing accidental opening of the coupling either through accidental engagement of the handle 30 by vibration or the like as a result of flow through conduits 2 and 3.

In the operation, the pipes 2 and 3 are laid in proper end to end relationship with the gasket located over the pipe for example as illustrated in Fig. 3. The coupling assembly is in the open position as shown in Fig. 4. The housing number 5 is swung about its hinge pin 9 to rest upon the pipe section with the brackets 25 aligned with the brackets 15. The handle 10 is moved upwardly to carry the bolt 17 between the aligned brackets 15 and 25. The cam ends and the cam arms 22 are engaged with the cam surfaces 24 and the handle 10 is then pivoted or swung about the pin 20. Thus, as viewed in Fig. 1, the handle 10 would be pivoted in a counterclockwise direction about the pin 20. It would first stress the housing causing them to move downwardly as a result of the spacing of the pins 16 and 20. The continued movement would cause the members to move 4 and 5 toward each other and tightly engage the pipes to thereby provide a firm physical interlock therebetween.

With the handle 10 completely pivoted to the closed position, the lug 28 engages the exterior surface of the member 5 with the openings 32 aligned. The locking pin 33 can then be conveniently passed through the openings 32 to firmly and positively interlock the toggle in the closed position.

As explained in the Background of the Invention, it has been found that pin 33 has a tendency to become lost so that the handle 30 might be inadvertently opened to impair the integrity of the pipe coupling 1. The present invention addresses this problem with a unique solution.

### The Present Invention

At the outset, it should be understood that the present invention is incorporated in a pipe coupling unit 1' of the type generally described above with distinguishing structure as noted below. Like components carry like reference numerals.

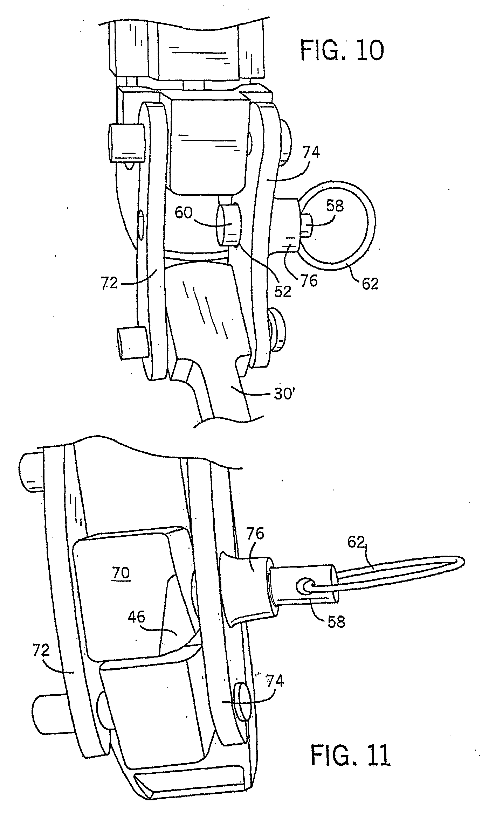

Referring now to Figs. 5-11, there is shown a locking arrangement 40 in the form of a spring biased pin captively and moveably mounted in a through opening formed either on one of the overlapping members of the one coupling section or the handle for movement into and out of an alignable opening formed either on the handle or on the one overlapping member of the one coupling section.

In the preferred embodiment of Figs. 5 and 6, handle 30' has a side wall 42 formed with a blind opening 44 and is formed with a cam or ramped surface 46 between a front wall 48 and the side wall 42 of the handle 30'. Flanges 29' of coupling member 5' have an inner wall 50 formed with a bore 52 which is similarly sized and alignable with the blind opening 44 in handle side wall 42. A hole 54 of smaller diameter than bore 52 is cut into an outer wall 56 of coupling member 5' and opens to a wall 57 into the bore 52. An elongated locking pin 58 has a medial portion which is passed through the hole 54, an inner end having a cap 60 which is movable back and forth into and out of the blind opening 44 and the bore 52, and an outer end which carries a finger ring 62. A coil spring 64 surrounds the pin 58 and has one end biased against the cap 60 and another end biased against the wall 57. It can be appreciated that the cap 60 prevents the pin 58 from being pulled out of its mounting on the coupling member 5'. Likewise, the ring 62 prevents the pin 58 from being extracted through the bore 52.

In use, the handle 30' is shown in a closed, locked position with the cap 60 on the pin 58 biased into the blind opening 44 in the handle 30'. By pulling on the ring 62 in the direction of the arrow A in Fig. 6, the cap 60 is temporarily removed from the blind opening 44 so that the handle 30' can be raised and opened. When the handle 30' is lowered and returned to the closed position, the cam surface 46 will slide or push the locking pin 58 back against the bias of the spring 64 until the pin 58 is aligned with the blind opening 44 in the handle 30'. As soon as there is alignment between the pin 58 and the blind opening 44, the spring 64 will snap the pin 58 into the blind opening 44 so that the coupling 1' again becomes locked. In unlocking the pin 58, one hand is used to pull the pin 58, while the other hand is used to raise or open the handle 30'. Locking of the pin 58 is done automatically with one hand as the handle 30' is closed by virtue of the spring action pin 58 and the cam surface 46.

One of the features of the present invention relates to an improved structure for the pipe coupling sections 4' and 5'. In order to permit joinder of a (metric) boom elbow or pipe with metric ends to a five inch diameter HEVI-DUTY™ hose end or pipe, one side 66 of an assymetrically-shaped gasket 65 (Fig. 7) used between sections 4' and 5' is of enlarged formation to clamp the end of a boom elbow having a metric end diameter, while the other side 68 of a gasket 65 is constructed of increased sized material to clamp the end of a five inch diameter hose or pipe with HEVI-DUTY™ ends. Between the sides of the gasket 65 is a general V-shaped central section 69 disposed between the opposed end faces of the metric boom elbow and the five inch boom hose. Outer side walls 65a, b, of the gasket 65 are slightly inclined and a base 65c is generally flat to conform to the shape of the cavity formed by the coupling unit and the placement of the adjoining metric end elbow and five inch boom hose with heavy-duty ends. Surfaces immediately adjacent V-shaped section 69 are angularly slotted at 65d, e so that when gasket 65 is applied to the ends of the elbow and boom hose, the gasket 65 is deformed to provide a tight, highly efficient, fluid tight seal. As a result, the prior art three part coupling of a metric coupling, an adapter and the heavy duty coupling is replaced by one hybrid unit so as to save time, setup cost, and weight.

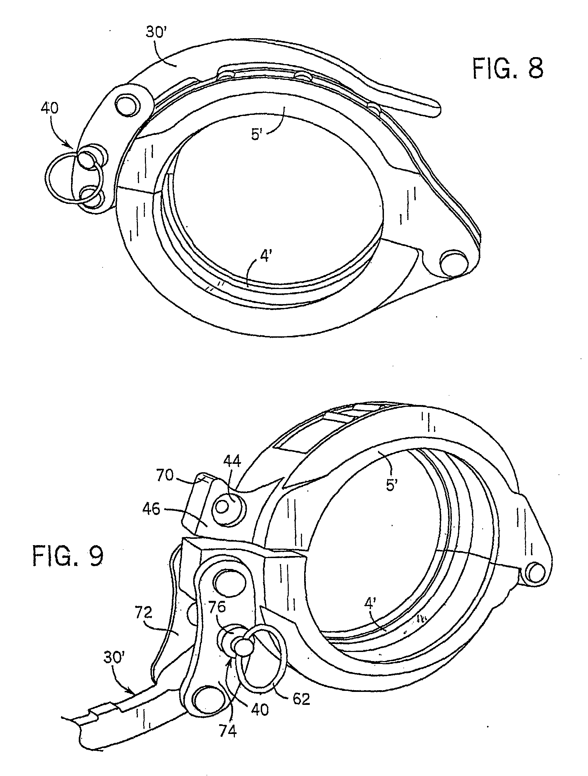

An alternative embodiment of the locking arrangement 40 is shown in Figs. 8-11. In this version, the locking arrangement 40 works along the same principles as described above except that the coupling number 5' is formed with a lug 70 having a blind opening 44 and a cam surface 46. Handle 30' has a pair of concave links 72, 74, one 72 of which is provided with a bore 52 which is alignable with blind opening 44. Attached to the outside of the link 72 by welding or the like is a barrel 76 which holds a movable pin 58 having an inner end provided with cap 60 movable into and out of blind opening 44, and an outer end attached to finger ring 62. Inside the barrel 76, coil spring 64 surrounds the pin 58 and has an inner end biased against the cap 60 and an outer end biased against a wall in the barrel 76. Operation is similar to that described above.

In the preferred embodiment, the opening 44 is shown as blind. However, it should be understood that the opening 44 could also be formed therethrough.

While the invention has been described with reference to a preferred embodiment, those skilled in the art will appreciate that certain substitutions, alterations and omissions may be made without departing from the spirit thereof. Accordingly, the foregoing description is meant to be exemplary only, and should not be deemed limitative on the scope of the invention set forth with the following claims.

## Claims

1. In a coupling unit for interconnecting of a pair of pipe sections comprising a plurality of coupling sections interconnected to define a cylindrical enclosure in a closed position for encircling the adjacent ends of a pair of cylindrical conduit means, the sections being interconnected to each other and including at least one hinged joint permitting relative pivotal movement of the sections to the opposite sides of the hinge joint between an open expanded position for insertion and removal of the conduit means and the closed circular position, a releasable interconnecting latch means interconnected to a pair of adjacent sections opposite the hinge joint and having an interconnecting handle pivoted between a coupling release position and a coupling close position to establish the closed circular position with a relatively high closing pressure, the handle having a generally arcuate configuration and pivotally mounted adjacent one end and extending circumferentially from the latch means about the coupling sections in the closed position, the handle and one of the coupling sections having radially overlapping members and locking means releasably engageable with the radially overlapping members to hold the handle in the closed position, the improvement wherein:
the locking means takes the form of a spring biased pin captively and moveably mounted in an opening formed either in one overlapping member of the one coupling section or the handle for movement into and out of an alignable opening formed on either the handle or the one overlapping member of the one coupling section.

2. The improvement of claim 1, wherein the coupling unit defines a cavity overlying the ends of the conduit means and including an assymetrically-shaped, circular gasket located within the cavity and between the ends of the conduit means and having a V-shaped central section with surfaces immediately adjacent thereto formed with angularly extending slots.

3. The improvement of claim 2, wherein one side of the gasket is provided with an enlarged formation engageable with the end of one of the conduit means having a first diameter, and the other side of the gasket is provided with a formation engageable with the end of the other of the conduit means having a second diameter different from the first diameter.

4. The improvement of claim 1, wherein the spring biased pin 15 engageable with a cam surface on either the handle or one overlapping member of the one coupling section.

5. A coupling unit for interconnecting of a pair of pipe sections comprising:
a plurality of coupling sections interconnected to define a cylindrical enclosure in a closed position for encircling the adjacent ends of a pair of cylindrical conduit means, the sections being interconnected to each other and including at least one hinged joint permitting relative pivotal movement of the sections to the opposite sides of the hinge joint between an open expanded position for insertion and removal of the conduit means and the closed circular position;
a releasable interconnecting latch means interconnected to a pair of adjacent sections opposite the hinge joint and having an interconnecting handle pivoted between a coupling release position and a coupling close position to establish the closed circular position with a relatively high closing pressure, the handle having a generally arcuate configuration and pivotally mounted adjacent one end and extending circumferentially from the latch means about the coupling sections in the closed position, the handle and one of the coupling sections having radially overlapping members;
locking means releasably engageable with the radially overlapping members to hold the handle in the closed position: and
an assymetrically-shaped, circular gasket located within a cavity defined in the coupling unit and between the ends of the conduit means, the gasket being constructed and arranged to enable direct coupling of the adjacent ends of the conduit means wherein each end of the conduit means has a diameter of different size.

6. The coupling unit of claim 5, wherein the locking means includes a spring biased pin arrangement captively and moveably disposed within the handle and the one overlapping member of the one coupling section.
